# EUROPEAN PATENT APPLICATION

(11) **EP 1 046 977 A2**
(43) Date of publication of application: **25.10.2000**
(21) Application number: 00303401.4
(22) Date of filing: 20.04.2000
(51) Int. Cl.: G06F 1/00

(54) **Modal security approach**

(30) Priority: 21.04.1999 US 296037
(71) Applicant: SUN MICROSYSTEMS, INC., Palo Alto, California 94303 (US)
(72) Inventor: Fellenz, Carola B., Mountain View, California 94041 (US)
(74) Representative: Read, Matthew Charles

(57) **Abstract**

An approach for selecting security preferences and handling security events in a computer program involves displaying first and second user interface objects via a user interface. The first and second user interface objects correspond to first and second user interface modes, respectively, for allowing a user to select security preferences and for handling security events. The first and second user interface modes support different levels of user sophistication and familiarity with security preferences and security events in computer programs.

## Description

### FIELD OF THE INVENTION

The present invention relates to data security, and more specifically, to a modal security approach for selecting security preferences and handling security events in computer software.

### BACKGROUND OF THE INVENTION

Data security can be an important concern in computing systems, particularly in distributed computing systems, where data exchanged between locations can be susceptible to unauthorized access by third parties. Some distributed computing systems use secure, proprietary connections to prevent, or at least reduce, unauthorized access to data exchanged between locations. However, secure proprietary connections are often expensive to install and maintain and do not guarantee data security. As a result, many distributed computing systems employ secure communication protocols with encryption algorithms to protect data exchanged between locations.

Data security is an important issue for distributed computing on the global computing network known as the "Internet." Data exchanged between locations via the Internet can travel through many different intermediate, and sometimes unknown, locations, making data transmitted over the Internet susceptible to unauthorized access. As a result, sensitive data transmitted over the Internet is often encrypted to prevent a third party from determining the contents of the data. One example of a secure communication protocol is Netscape Communications Corporation's Secure Sockets Layer (SSL).

In computer software, data security characteristics or attributes, sometimes referred to as security preferences, are sometimes manually selected by a user using a user interface with pull-down menus and screens. Examples of security preferences include the specific encryption algorithm used and the bit length of an encryption key. Many Internet "browsers" have a security preferences option which, when selected, displays one or more pull-down menus for selecting security preferences. Generally, a "browser" is a utility program that allows a user to locate and retrieve information from networked information services. In the context of the Internet, a "browser" is a software tool that allows a user to view web pages. Examples of Internet browsers include Sun Microsystems' Net Dynamics Browser, Microsoft's Internet Explorer and Netscape's Communicator.

In Internet browsers, security preferences are typically not organized by importance or user skill level. As a result, users are presented with a plethora of security preferences, many of which may not be well understood. For example, in the context of Internet browsers, users are often presented with a myriad of content-related security preferences and certificate-related security preferences that can cause several problems.

First, it is often difficult and frustrating for users to discern which security preferences are important since security preferences are not usually organized by importance. As a result, users sometimes find themselves navigating through menu after menu of security preferences without being sure of which security preferences are the most important. Another problem is that all users typically have access to all of the security preferences. As a result, it is easy for novice users to incorrectly select security preferences, possibly making their computer insecure. One approach to solve this problem has been to locate some security preferences on an "advanced" screen. However, novice users are not prevented from entering these screens and may actually be enticed to do so by the "advanced" label.

A related problem with computer software, and in particularly browsers, is how security events are handled for users of different skill levels. For example, when a user attempts to connect to a web site and the user's browser does not recognize the certifying authority that issued a web site's certificate, the user is notified and presented with various options for responding to the notification. Typical options include aborting the connection attempt and proceeding to connect to the website, despite the security warning. One of the problems is that security event notifications often include language and terms that are unfamiliar to inexperienced users. As a result, inexperienced users may be unsure about how to respond to security notifications and may inadvertently operate under insecure conditions.

Based on the need to configure security preferences and handle security events in network application software such as Internet browsers, and the limitations in the prior approaches, an approach for configuring security preferences and handling security events in computer software that avoids the limitations in the approaches previously described is highly desirable.

### SUMMARY OF THE INVENTION

According to one aspect of the invention, a modal security method is provided for selecting security preferences and handling security events in computer software. A first user interface object is displayed via a user interface, wherein the first user interface object is associated with a first user interface mode in which a first set of one or more user interface objects is available for selecting the security preferences. A second user interface object is displayed via the user interface, wherein the second user interface object is associated with a second user interface mode in which a second set of one or more user interface objects is available for selecting the security preferences. A user interaction associated with the user interface is detected and a determination is made whether the user interaction is associated with either the first user interface object or the second user interface object. If the user interaction is associated with the first user interface object, then the first user interface mode is initiated. If the user interaction is associated with the second user interface object, then the second user interface mode is initiated.

According to another aspect of the invention, a computer system is provided for selecting security preferences and handling security events in computer software. The computer system includes a user interface, a first user interface object displayed via the user interface and a second user interface object displayed via the user interface. The first user interface object is associated with a first user interface mode in which a first set of one or more user interface objects is available for selecting security preferences. The second user interface object is associated with a second user interface mode in which a second set of one or more user interface objects is available for selecting the security preferences. The computer system is configured to detect a user interaction associated with the user interface, determine whether the user interaction is associated with either the first user interface object or the second user interface object, if the user interaction is associated with the first user interface object, then initiate the first user interface mode, and if the user interaction is associated with the second user interface object, then initiate the second user interface mode. Other aspects and features of the invention will become apparent from the following description and claims.

### BRIEF DESCRIPTION OF THE DRAWINGS

Embodiments of the invention are illustrated by way of example, and not by way of limitation, in the figures of the accompanying drawings and in which like reference numerals refer to similar elements and in which:
FIG. 1A is a block diagram illustrating an approach for selecting security preferences in computer software according to an embodiment of the invention;
FIG. 1B is a high-level flow chart illustrating an approach for selecting security preferences in computer software according to an embodiment of the invention;
FIG. 2 is a block diagram illustrating an approach for selecting "Warnings" security preferences in a basic security administration mode according to an embodiment of the invention;
FIG. 3 is a block diagram illustrating an approach for selecting "Cookies" security preferences in a basic security administration mode according to an embodiment of the invention;
FIG. 4 is a block diagram illustrating an approach for selecting "Cookies" security preferences in an advanced security administration mode according to an embodiment of the invention;
FIG. 5 is a block diagram illustrating an approach for selecting "Applets/JavaScript" security preferences in an advanced security administration mode according to an embodiment of the invention;
FIG. 6 is a block diagram illustrating an approach for selecting "Applets" security preferences in an advanced security administration mode according to an embodiment of the invention;
FIG. 7 is a block diagram illustrating an approach for selecting "Signed Applets" security preferences in an advanced security administration mode according to an embodiment of the invention;
FIG. 8 is a block diagram illustrating an approach for selecting "JavaScript" security preferences in an advanced security administration mode according to an embodiment of the invention;
FIG. 9 is a block diagram illustrating an approach for selecting "Special Cases" of "Applets/JavaScript" security preferences in an advanced security administration mode according to an embodiment of the invention;
FIG. 10 is a block diagram illustrating adding a new item or editing an existing item from the user interface of FIG. 9;
FIG. 11 is a block diagram illustrating an approach for selecting "Web Sites" security preferences in an advanced security administration mode according to an embodiment of the invention;
FIG. 12 is a block diagram illustrating an approach for selecting "Warnings" security preferences in an advanced security administration mode according to an embodiment of the invention;
FIG. 13 is a block diagram illustrating an approach for selecting "SSL" security preferences in an advanced security administration mode according to an embodiment of the invention;
FIG. 14 is a block diagram illustrating an approach for selecting "Certificate" security preferences in an advanced security administration mode according to an embodiment of the invention;
FIG. 15 is a block diagram illustrating an approach for selecting "Certifying Authorities" security preferences in an advanced security administration mode according to an embodiment of the invention;
FIG. 16 is a block diagram illustrating an approach for selecting "Web Site Certificate" security preferences in an advanced security administration mode according to an embodiment of the invention;
FIG. 17 is a block diagram illustrating an approach for selecting "Software Publishers" security preferences in an advanced security administration mode according to an embodiment of the invention;
FIG. 18 is a block diagram illustrating a modal approach for handling a security event in a basic user interface mode according to an embodiment of the invention;
FIGS. 19-21 are block diagrams illustrating a modal approach for handling a security event in an advanced user interface mode according to an embodiment of the invention; and
FIG. 22 is a block diagram of a computer system on which embodiments of the invention may be implemented.

### DETAILED DESCRIPTION OF THE INVENTION

In the following description, for the purposes of explanation, specific details are set forth in order to provide a thorough understanding of the invention. However, it will be apparent that the invention may be practiced without these specific details. In other instances, well-known structures and devices are depicted in block diagram form in order to avoid unnecessarily obscuring the invention.

### FUNCTIONAL OVERVIEW

A modal approach for selecting security preferences and handling security events in computer software, according to an embodiment of the invention, involves using two or more user interface modes to select security preferences and handle security events. As used herein, the term "computer software" refers to any type of computer program or instructions which, when executed by a computer, cause the computer to perform a particular function. As used herein, the term "user interface mode" refers to an operational mode that provides for the exchange of information between a computer and a user. This approach allows security preferences to be organized by importance and accommodates users having different skill levels and different levels of familiarity with security preferences and handle security events.

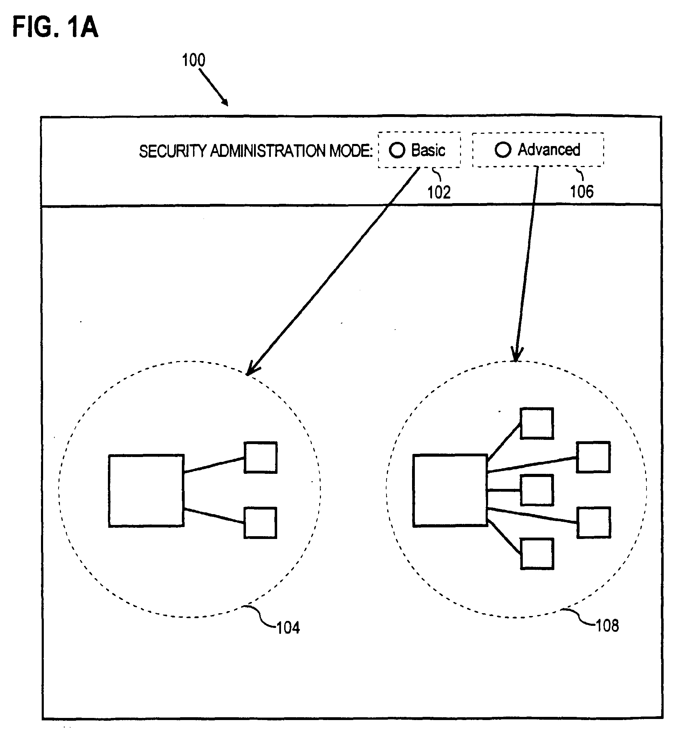

FIG. 1A is a block diagram illustrating a modal approach for selecting security preferences and handling security events in computer software according to an embodiment of the invention. A user interface 100 provides a means of communication between a user and a computer (not illustrated). User interface 100 may include any mechanism for providing communication between a user and a computer and the invention is not limited to any particular type of user interface 100. For example, user interface 100 may include a visual display such as a cathode ray tube (CRT) and a pointing device such as a mouse. As another example, user interface 100 may include speech synthesis and speech recognition mechanisms.

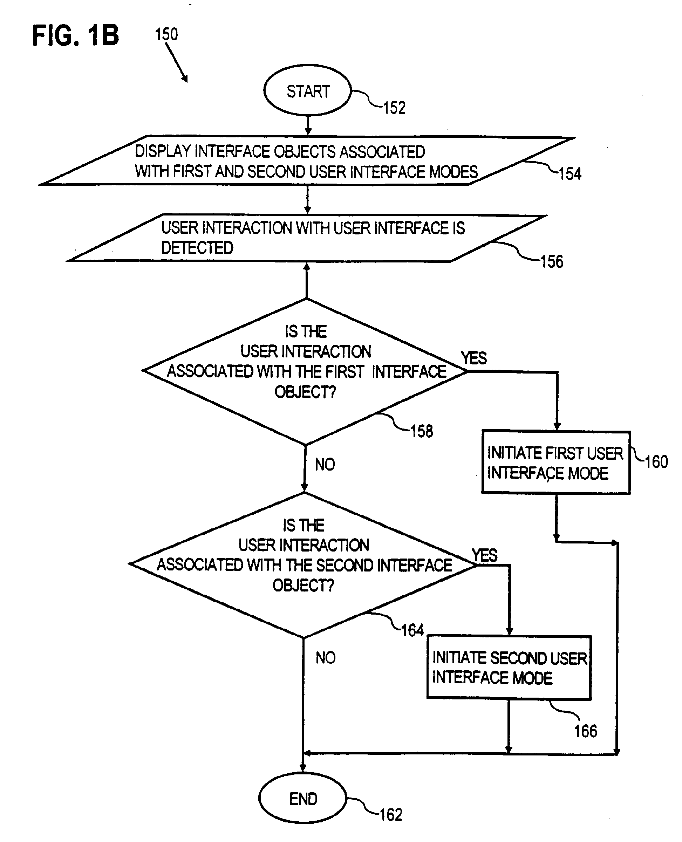

A user interface object 102 is displayed via user interface 100. As used herein, the term "user interface object" refers to any object displayed via user interface 100 that provides for the exchange of information between a user and a computer (not illustrated in FIG. 1) associated with user interface 100. Hence, as used herein, a user interface object may convey information to a user, accept input from a user, or both convey information to a user and accept input from a user. Examples of user interface objects include, but are not limited to, text, menus, buttons, dialog boxes and other graphic-based symbols.

According to one embodiment of the invention, user interface object 102 is provided for initiating a first user interface mode for selecting security preferences. The first user interface mode is defined by a first set of user interface operations and a set of user interface objects 104 with which a user may interact to select security preferences. Furthermore, according to one embodiment of the invention, the first user interface mode is specifically designed for users with a first user attribute. As used herein, the term "user attribute" refers to any characteristic of a user. Examples of user attributes include user identities and user skill level such as beginner and advanced. Thus, the first user interface mode may be designed for "basic" or "beginner" users, or users that are relatively inexperienced with security preferences.

A second user interface object 106 is also displayed via user interface 100. According to one embodiment of the invention, user interface object 106 is provided for initiating a second user interface mode for selecting security preferences. The second user interface mode is defined by a second set of user interface operations and a set of user interface objects 108 with which a user may interact to select the security preferences. Furthermore, according to one embodiment of the invention, the second user interface mode is specifically designed for users with a second user attribute. Thus, the second user interface mode may be designed for "advanced" users, or users that are relatively more experienced in understanding and/or selecting security preferences.

FIG. 1B is a high level flow chart 150 illustrating an approach for selecting security preferences in computer software according to an embodiment of the invention. After starting in step 152, in step 154, user interface objects 102 and 106 corresponding to the first and second user interface modes, respectively, are displayed via user interface 100.

According to one embodiment of the invention, the first and second user interface modes are implemented to accommodate users having different skill levels and different familiarity with security preferences. For example, the first user interface mode may be a "basic" mode to accommodate users having a relatively lower skill level and/or familiarity with security preferences while the second user interface mode is an "advanced" mode to accommodate users having a relatively higher skill level and/or familiarity with security preferences. Accordingly, user interface objects 104 may be selected to use relatively basic terminology and provide relatively fewer security preference choices than user interface objects 108. According to one embodiment of the invention, values for security preferences that are not accessible to a user in the basic mode are automatically set to specified values.

In step 156, a user interaction with user interface 100 is detected. In step 158, a determination is made whether the user interaction is associated with user interface object 102 associated with the first user interface mode. If so, then in step 160, the first user interface mode is initiated to allow a user to specify security preferences in the first user interface mode. The process is complete in step 162.

If in step 158 a determination is made that the user interaction is not associated with user interface object 102 associated with the first user interface mode, then in step 164, a determination is made whether the user interaction is associated with user interface object 106 associated with the second user interface mode. If so, then in step 166, the second user interface mode is initiated to allow a user to specify security preferences in the second user interface mode. The process is complete in step 162. If in step 164 a determination is made that the user interaction is not associated with user interface object 106 associated with the second user interface mode, then the process is complete in step 162.

### SECURITY ADMINISTRATION MODES

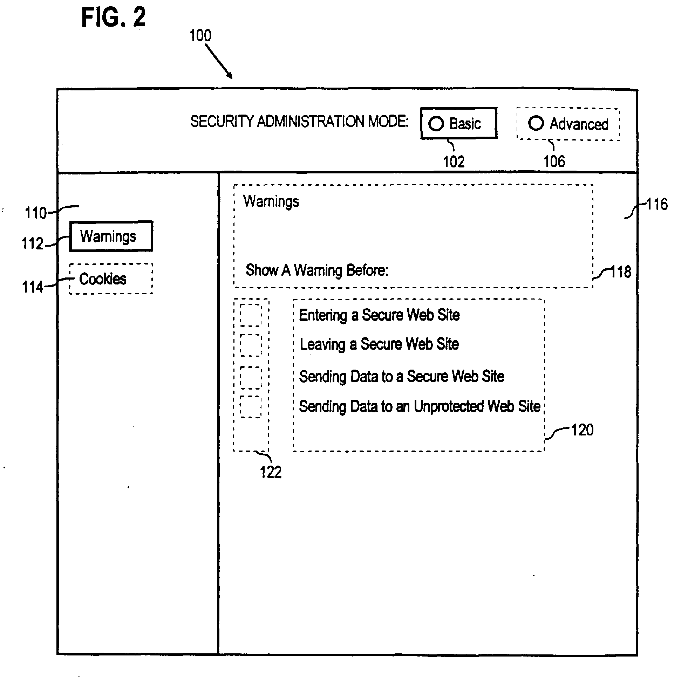

The modal approach for selecting security preferences in computer software is now described in more detail with reference to FIGS. 2-17. Embodiments of the invention are described hereinafter in the context of: (1) a basic security administration mode; and (2) an advanced security administration mode for selecting security preferences in computer software. As will be evident from the figures and the following description, the basic security administration mode provides relatively fewer security preferences than the advanced security administration mode. Fewer security preferences reduces the likelihood that a less experienced user will be confused. Fewer security preferences also reduces the likelihood that an inexperienced user will operate in an unsafe mode. It should be pointed out that the user interface and user interface objects illustrated in FIGS. 2-17 are provided to aid the reader in understanding the various features and aspects of the invention and do not necessarily include all features that might be displayed via a user interface. For example, it will be well understood that the user interface illustrated in FIGS. 2-17 might include additional "buttons" and user interface features for performing various interface functions that are not illustrated or described so as to not obscure the features and aspects of the invention.

### 1. Basic Security Administration Mode

In general, the basic security administration mode is designed to accommodate users having a relatively lower skill level and/or familiarity with security preferences. As a result, the user interface objects used in the basic security administration mode have relatively fewer selections and use less technical supporting text than those in the advanced security administration mode described hereinafter.

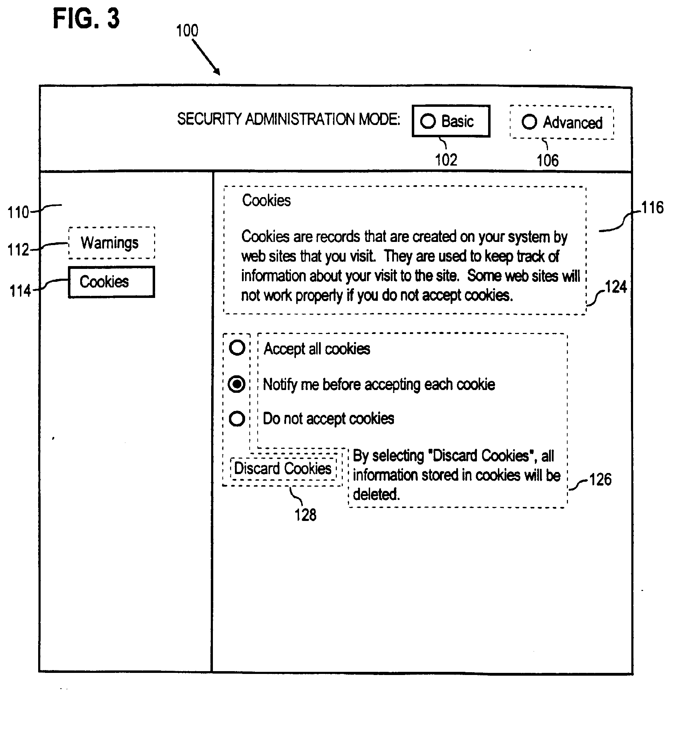

FIGS. 2 and 3 are block diagrams illustrating the basic security administration mode for selecting user preferences associated with user interface object 102. User interface 100 includes a region 110, referred to herein as a "sidebar", for displaying categories of security preferences that can be selected by a user in the first user interface mode. In the present example, sidebar 110 includes a user interface object 112 associated with security preferences categorized as "Warnings." Sidebar 110 also includes a user interface object 114 associated with security preferences categorized as "Cookies."

User interface 100 also includes a region 116 referenced to herein as "dialog area" 116 that displays information and user interface objects associated with a "selected" object from sidebar 110. User interface objects may be "selected" and "deselected" by a user in a variety of ways, for example by manipulating a user interface pointing device such as a mouse, trackball or scratchpad, by manipulating a keyboard, or by otherwise interacting with user interface 100. In the present example, user interface object 112, associated with "Warnings" security preferences, has been selected, as indicated by the solid line surrounding user interface object 112.

In the present example, dialog area 116 includes text information 118, text information 120 and selectable objects 122, associated with user interface object 112. Text information 118 provides information about the "Warnings" security preferences associated with user interface object 112. Text information 120 includes a list of "Warnings" security preferences that may be individually selected or deselected by manipulating a corresponding interface object from selectable objects 122.

Referring now to FIG. 3, user interface object 114, associated with "Cookies" security preferences, has been selected, as indicated by the solid line surrounding user interface object 114. Dialog area 116 includes text information 124, text information 126 and selectable objects 128, associated with user interface object 114. Text information 124 provides information about the "Cookies" security preferences associated with user interface object 114. Text information 126 includes a list of "Cookies" security preferences that may be individually selected or deselected by manipulating a corresponding interface object from selectable objects 128.

### 2. Advanced Security Administration Mode

In general, the advanced security administration mode is designed to accommodate users having a relatively higher skill level and/or familiarity with security preferences. As a result, the advanced security administration mode includes more security preferences and may use more technical supporting text than the basic security administration mode.

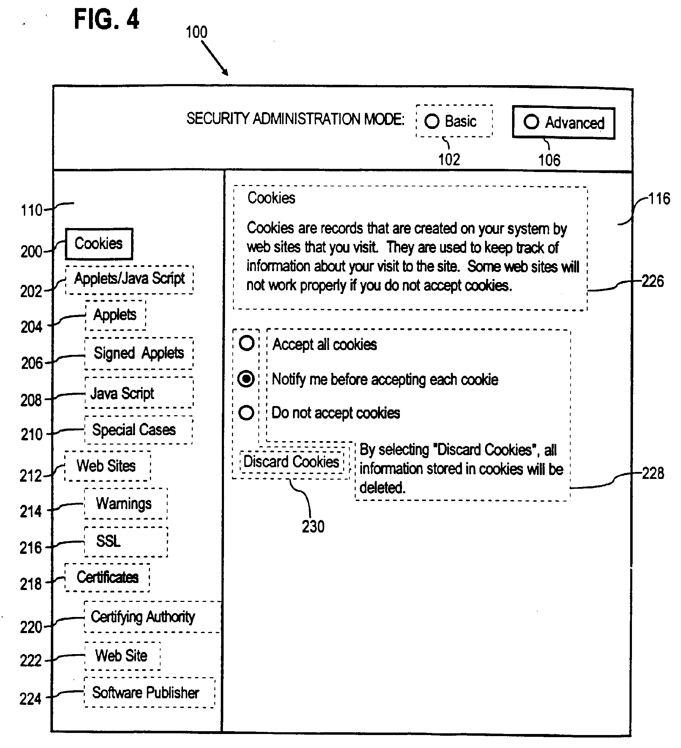

FIGS. 4-17 are block diagrams illustrating the advanced security administration mode for selecting user preferences associated with user interface object 106. Sidebar 110 includes a user interface object 200 associated with "Cookies" security preferences and a user interface object 202 associated with "Applets/JavaScript" security preferences. Four types of "Applets/JavaScript" security preferences are provided and are associated with user interface object 204 "Applets", user interface object 206 "Signed Applets", user interface object 208 "JavaScript" and user interface object 210 "Special Cases."

Sidebar 110 also includes a user interface object 212 associated with "Web Sites" security preferences. Two types of "Web Sites" security preferences are provided and are associated with user interface object 214 "Warnings" and user interface object 216 "SSL."

Sidebar 110 also includes a user interface object 218 associated with "Certificates" security preferences. Three types of "Certificate" security preferences are provided and are associated with user interface object 220 "Certifying Authorities", user interface object 222 "Web Sites" and user interface object 224 "Software Publishers."

In the present example, user interface object 200 associated with the "Cookies" security preferences has been selected. Accordingly, dialog area 116 includes text information 226, text information 228 and selectable objects 230, associated with user interface object 200. Text information 226 provides information about the "Cookies" security preferences associated with user interface object 200. Text information 228 includes a list of "Cookies" security preferences that may be individually selected or deselected by manipulating a correspond interface object from selectable objects 230.

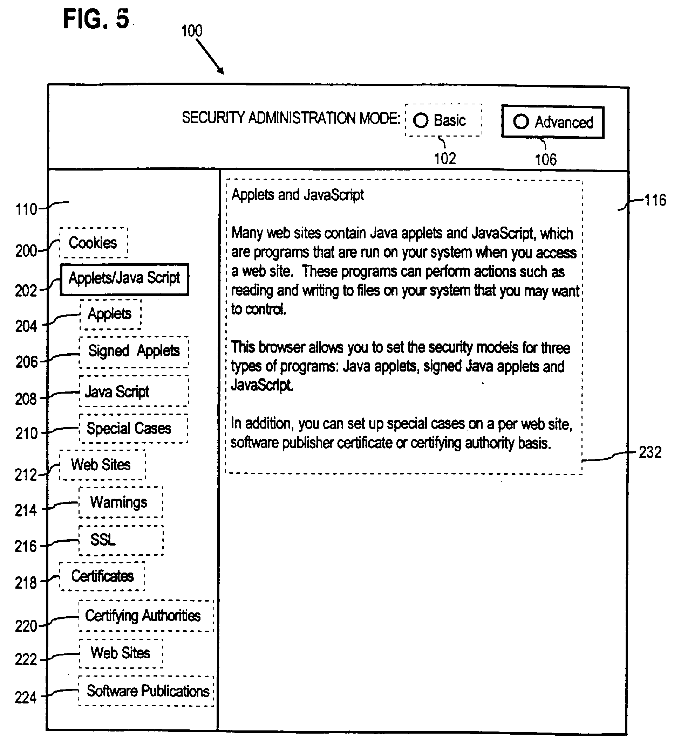

Referring now to FIG. 5, user interface object 202, associated with "Applets/JavaScript" security preferences has been selected. Dialog area 116 includes text information 232 that provides information about the "Applets/JavaScript" security preferences associated with user interface object 202.

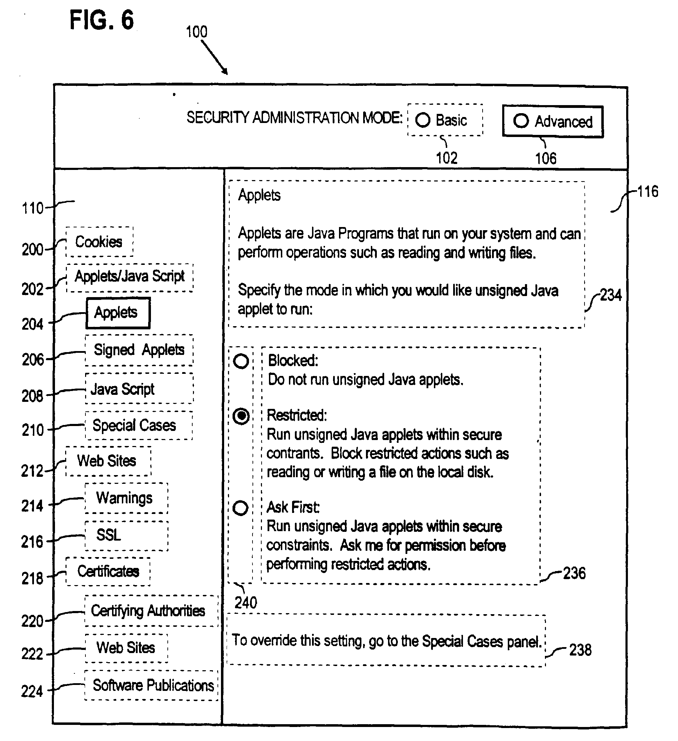

Referring now to FIG. 6, user interface object 204, associated with "Applets" security preferences has been selected. Dialog area 116 includes text information 234, text information 236, text information 238 and selectable objects 240, associated with user interface object 204. Text information 234 provides information about the "Applets" security preferences associated with user interface object 204. Text information 236 specifies a list of "Applets" security preferences that may be individually selected or deselected by manipulating a corresponding interface object from selectable objects 240. Text information 238 specifies additional information about selecting "Applets" security preferences using selectable objects 240.

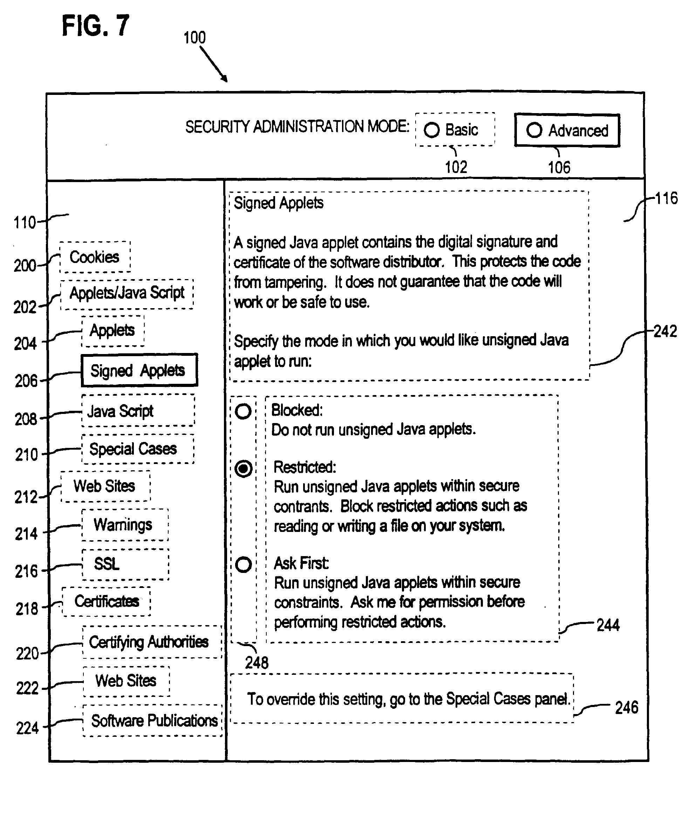

Referring now to FIG. 7, user interface object 206, associated with "Signed Applets" security preferences has been selected. Dialog area 116 includes text information 242, text information 244, text information 246 and selectable objects 248, associated with user interface object 206. Text information 242 provides information about the "Signed Applets" security preferences associated with user interface object 206. Text information 244 specifies a list of "Signed Applet" security preferences that may be individually selected or deselected by manipulating a corresponding interface object from selectable objects 248. Text information 246 specifies additional information about selecting "Applets" security preferences using selectable objects 248.

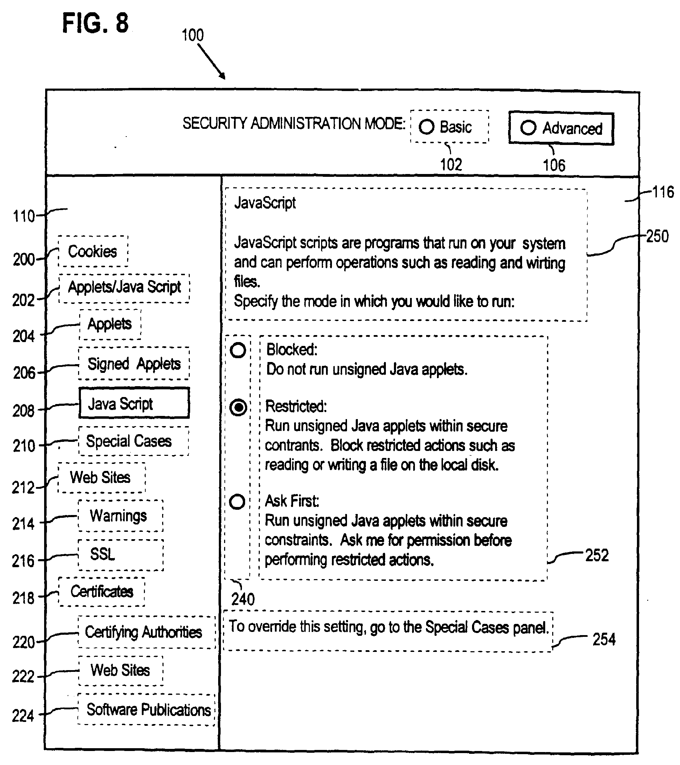

Referring now to FIG. 8, user interface object 208, associated with "JavaScript" security preferences has been selected. Dialog area 116 includes text information 250, text information 252, text information 254 and selectable objects 256, associated with user interface object 208. Text information 250 provides information about the "JavaScript" security preferences associated with user interface object 208. Text information 252 specifies a list of "JavaScript" security preferences that may be individually selected or deselected by manipulating a corresponding interface object from selectable objects 256. Text information 254 specifies additional information about selecting "JavaScript" security preferences using selectable objects 256.

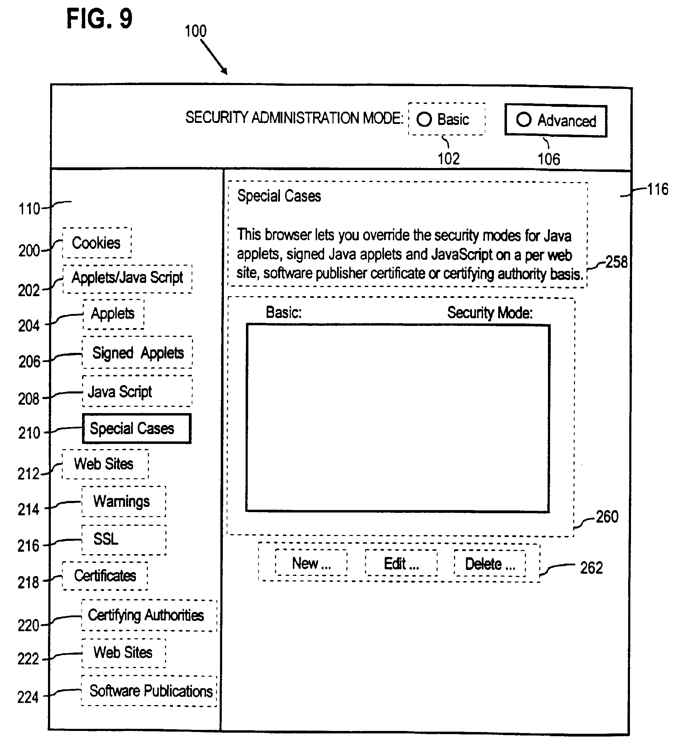

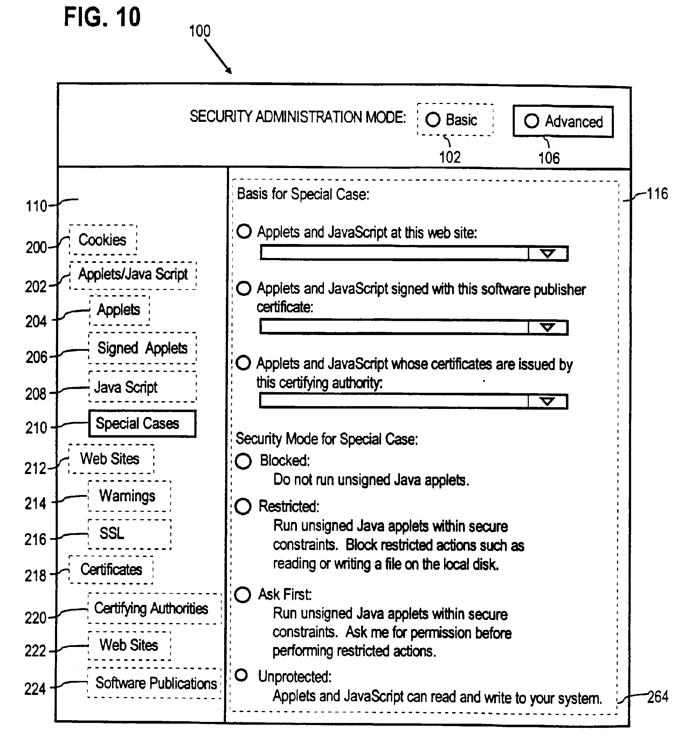

Referring now to FIG. 9, user interface object 210, associated with "Special Cases" security preferences has been selected. Dialog area 116 includes text information 258, a user interface object 260 and user interface objects 262. Text information 258 provides information about the "Special Case" security preferences associated with user interface object 210. User interface object 260 is typically referred to as a scrolling window for viewing web site identifiers, software publisher certificates and certifying authorities for which the security mode may be individually selected. User interface objects 262 are in the form of action "buttons" for adding new items or editing or deleting existing items in user interface object 260. FIG. 10 is a block diagram that illustrates an example set of user interface objects 264 that may be used adding a new item or editing an existing item in user interface object 260 of FIG. 9.

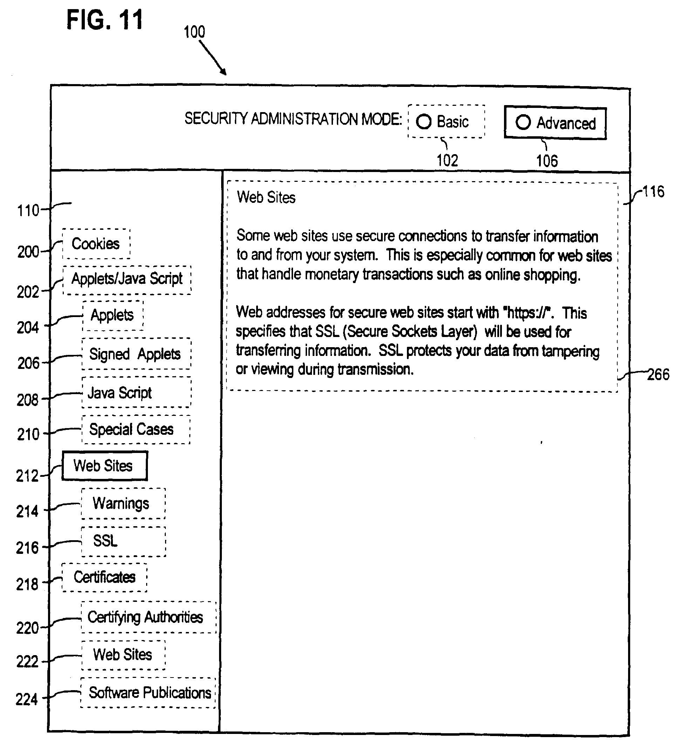

Referring now to FIG. 11, user interface object 212, associated with "Web Site" security preferences has been selected. Dialog area 116 includes text information 266 that provides information about the "Web Site" security preferences associated with user interface object 212.

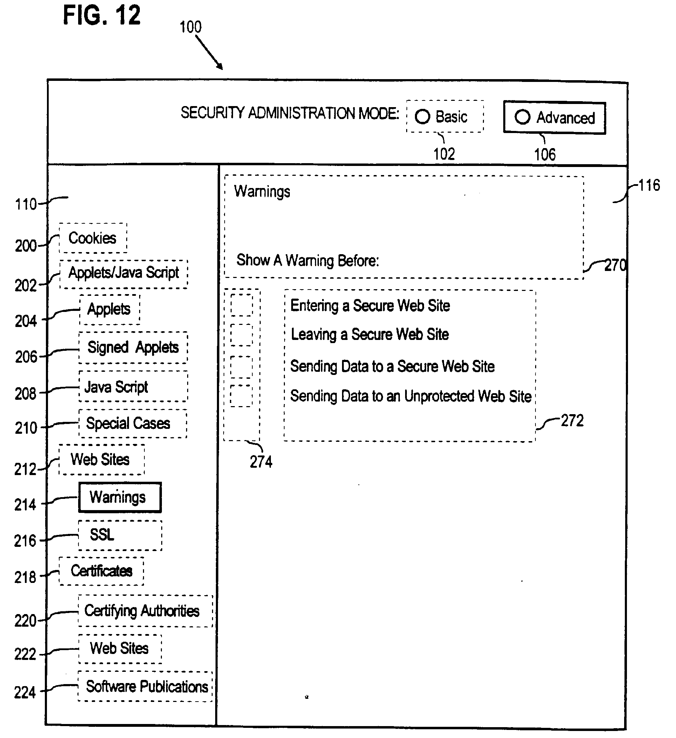

Referring now to FIG. 12, user interface object 214, associated with "Warnings" security preferences has been selected. Dialog area 116 includes text information 270, text information 272 and selectable objects 274, associated with user interface object 214. Text information 270 provides information about the "Warnings" security preferences associated with user interface object 214. Text information 272 includes a list of "Warnings" security preferences that may be individually selected or deselected by manipulating the correspond interface object from selectable objects 274.

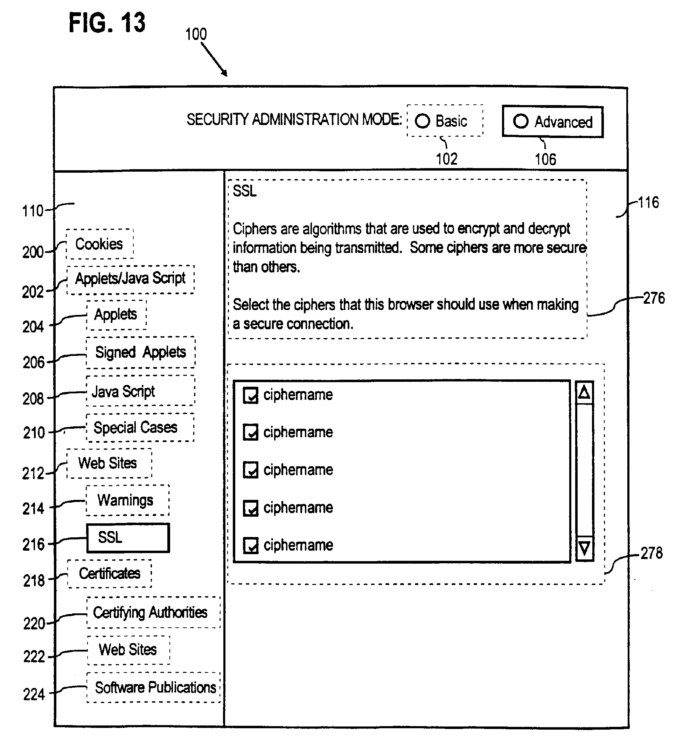

Referring now to FIG. 13, user interface object 216, associated with "SSL" security preferences has been selected. Dialog area 116 includes text information 276 and user interface objects 278. Text information 276 provides information about the "SSL" security preferences associated with user interface object 216. User interface objects 278 allow a user to select particular ciphers to be used by the browser.

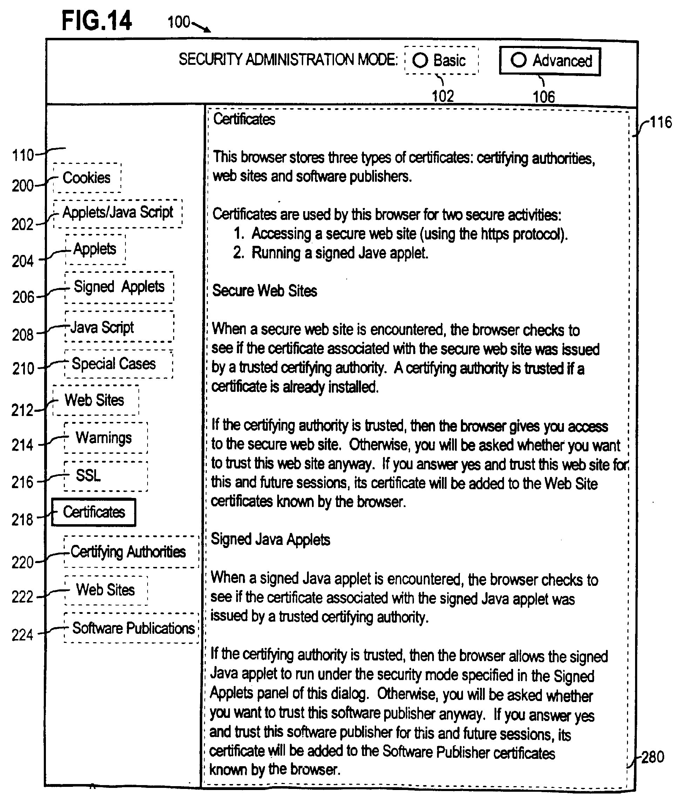

Referring now to FIG. 14, user interface object 218, associated with "Certificate" security preferences has been selected. Dialog area 116 includes text information 280 that explains the purpose and use of certificates for the browser.

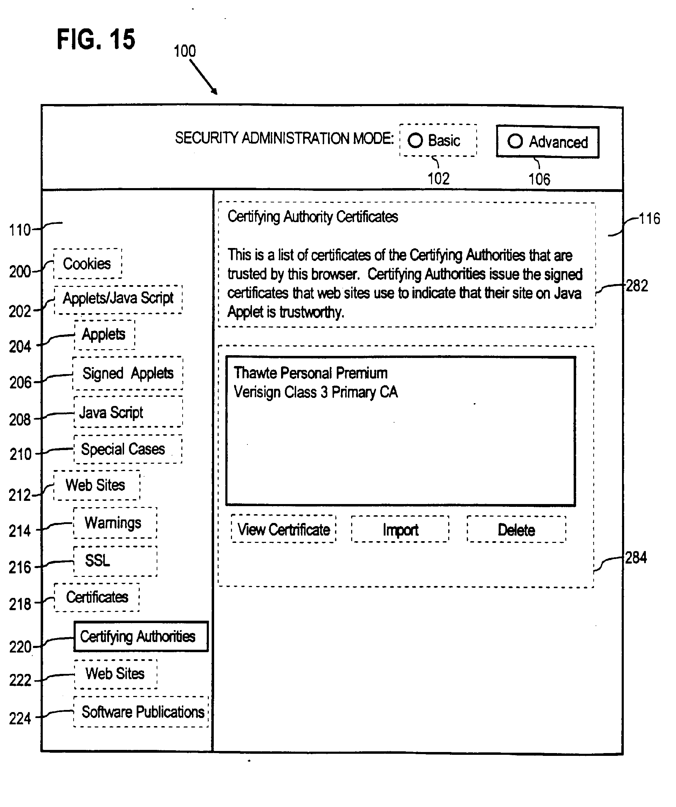

Referring now to FIG. 15, user interface object 220, associated with "Certifying Authorities" security preferences has been selected. Dialog area 116 includes text information 282 and user interface objects 284. Text information 282 provides information about the "Certifying Authorities" security preferences associated with user interface object 220. User interface objects 284 allow a user to add (import) new certifying authority certificates or to view or delete existing certifying authority certificates.

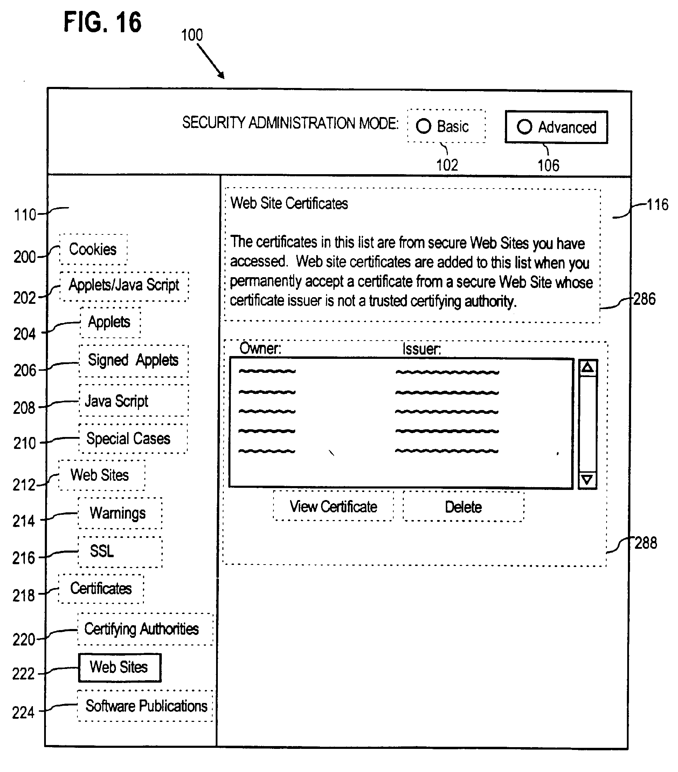

Referring now to FIG. 16, user interface object 222, associated with "Web Site Certificate" security preferences has been selected. Dialog area 116 includes text information 286 and user interface objects 288. Text information 286 provides information about the "Web Site Certificate" security preferences associated with user interface object 222. User interface objects 288 allow a user to view and delete certificates from secure web sites that have been visited.

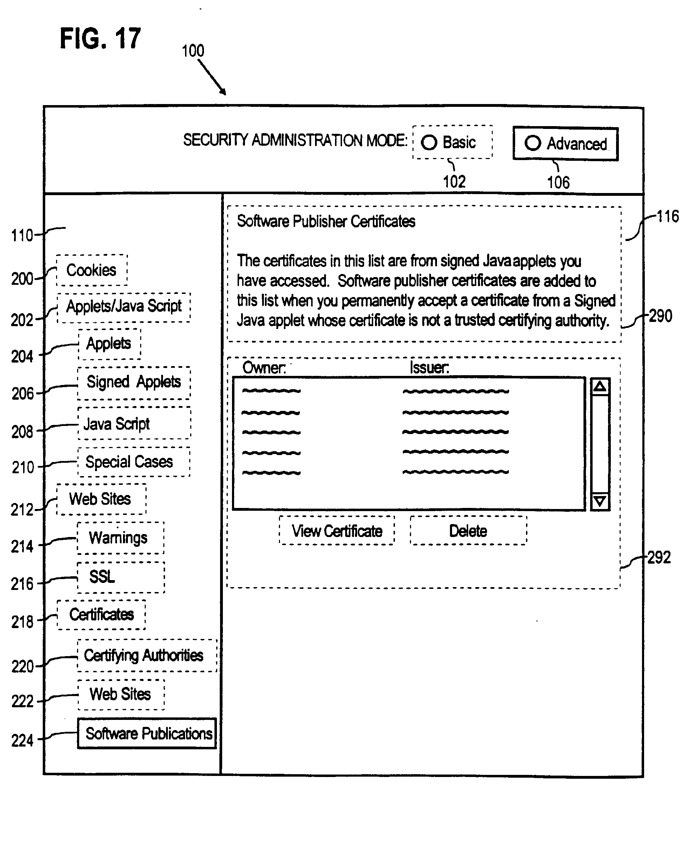

Referring now to FIG. 17, user interface object 224, associated with "Software Publisher Certificate" security preferences has been selected. Dialog area 116 includes text information 290 and user interface objects 292. Text information 290 provides information about the "Software Publisher Certificate" security preferences associated with user interface object 224. User interface objects 292 allow a user to view and delete software publisher certificates from signed Java applets that have been accessed.

### HANDLING SECURITY EVENTS

The modal approach described herein in the context of selecting security preferences is also applicable to handling security events. As used herein, the term "security event" refers to any type of event related to security and the invention is not limited to any particular type of security event. An example of a security event is a condition that threatens the safety or security of data. Another example of a security event is when a user attempts to initiate a financial transaction while connected to an insecure web site.

According to an embodiment of an invention, two or more user interface modes are used to handle security events. Thus, the specific user interface objects displayed on user interface 100 in response to a security event depend upon the particular user interface mode that is in use at the time the security event occurs. For example, in a basic user interface mode, the user interface objects displayed on a user interface in response to a security event may use simple language and offer relatively few choices for responding to the security event. On the other hand, in an advanced user interface mode, the user interface objects may use more sophisticated language and offer a relatively larger number of choices for responding to the security event.

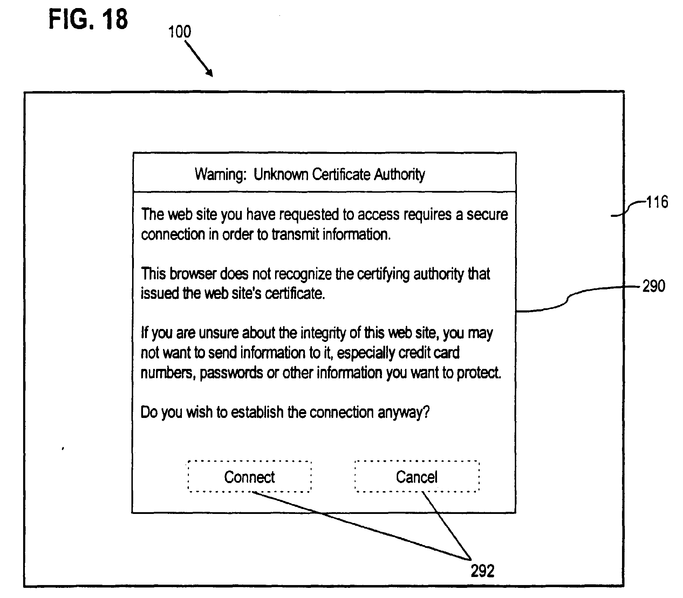

FIG. 18 illustrates a modal approach for handling security events using a first user interface mode according to an embodiment of the invention. The first user interface mode is generally associated with beginner or basic users. In the present example, it is presumed that a user has attempted to access a site that requires a secure connection and the certifying authority that issued the web site's certificate is not recognized.

As illustrated in FIG. 18, a dialog box 290 is displayed in dialog area 116. Dialog box 290 warns the user that the certificate authority is unknown. In addition, the user is given the opportunity to either connect to the web site or cancel the connection attempt using selectable objects 292.

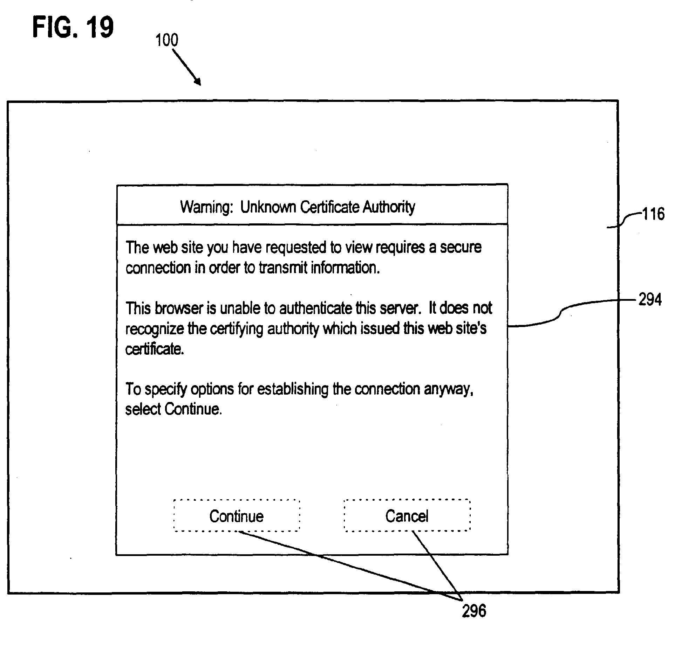

FIGS. 19-21 illustrate a modal approach for handling security events using a second user interface mode according to an embodiment of the invention. The second user interface mode generally corresponds to an advanced user mode. As illustrated in FIG. 19, a dialog box 294 is displayed in dialog area 116. Dialog box 294 warns the user that the certificate authority is unknown. In addition, the user is given the opportunity to either continue and specify options for establishing the connection or cancel the connection attempts using selectable objects 296.

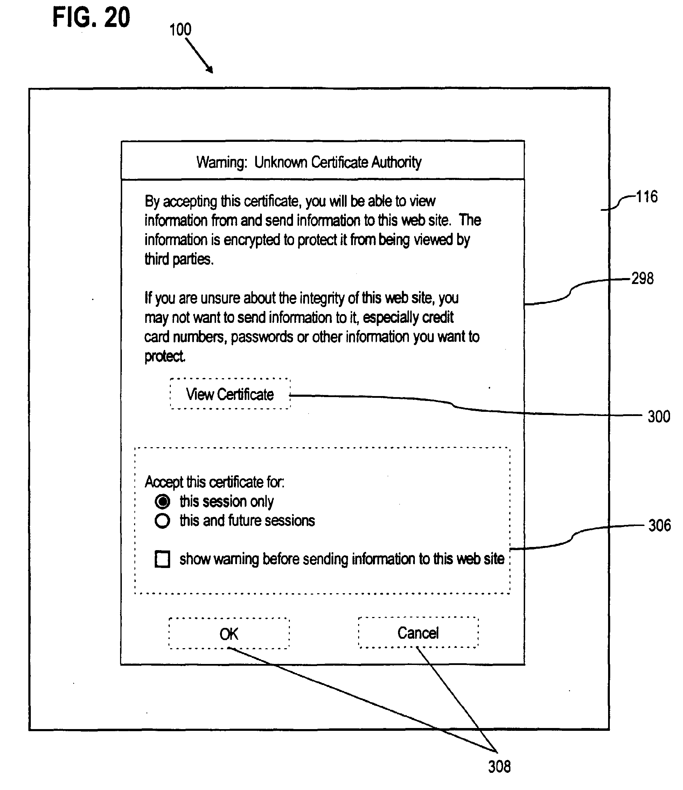

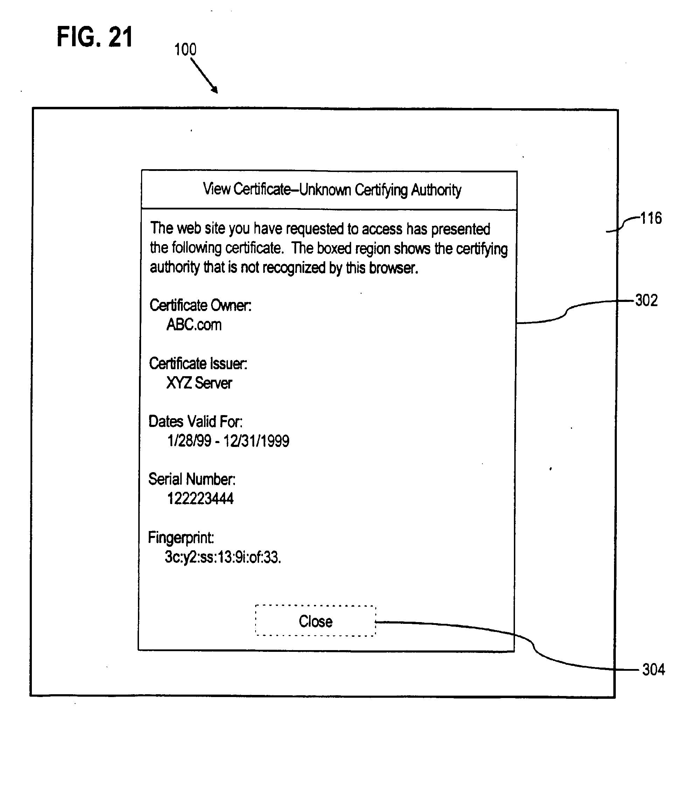

Selecting continue to specify options for establishing the connection causes the user interface interaction illustrated in FIG. 20. A dialog box 298 informs the user about certificates and allows a user to view the certificate by selecting user interface object 300. Selecting user interface object 300 causes certificate information to be viewed as illustrated in FIG. 21. Specifically, in FIG. 21, certificate details are presented in a dialog box 302. A user may return to the display of FIG. 20 by selecting a user interface object 304 in FIG. 21.

Referring again to FIG. 20, in addition to viewing the certificate, a dialog box 306 provides several user options including accepting the certificate for this session only, accepting the certificate for this and future sessions and showing a warning before sending information to the web site. Finally, a user may accept the selections or abort viewing the certificate by selecting user interface object 308.

As is evident form the prior example, the modal approach described herein is applicable to both security preferences selected by a user, as well as user interface activity generated in response to security events. Specifically, for a given security event, such as attempting to connect to a web site that requires a secure connection, a user may be presented with different user interface objects, e.g., dialog boxes, and different options, depending upon the particular user interface mode. This allows users of different skill levels and experience to successfully respond to a given security event.

Although embodiments of the invention have been illustrated and described in the context of using two user interface modes to select security attributes, any number of user interface modes may be used and the invention is not limited to a particular number of user interface modes. For example, three user interface modes corresponding to basic, intermediate and advanced security administration modes may be used.

### IMPLEMENTATION MECHANISMS

The modal approach for selecting security preferences in computer software as described herein may be integrated into one or more computer software programs as part of the "front end," or may be implemented as a stand-alone process that interacts with other software processes. The approach may be implemented using any number of sequences of instructions executing on a general purpose computer to provide the necessary functionality on a computer user interface. However, the invention is not limited to pure software implementations. The approach may be implemented in hardware circuitry, in computer software, or a combination of hardware circuitry and computer software.

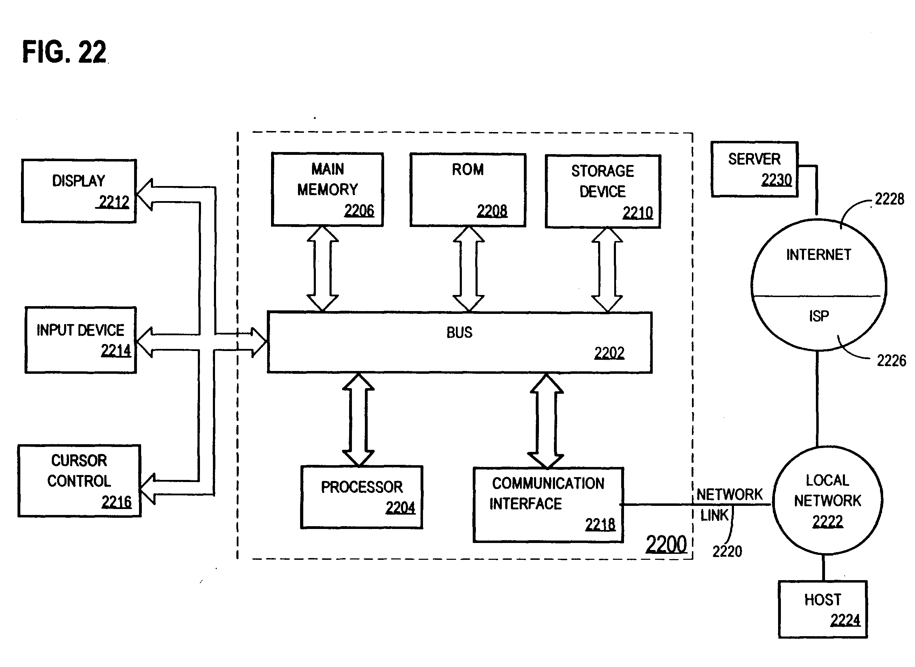

Figure 22 is a block diagram that illustrates a computer system 2200 upon which an embodiment of the invention may be implemented. Computer system 2200 includes a bus 2202 or other communication mechanism for communicating information, and a processor 2204 coupled with bus 2202 for processing information. Computer system 2200 also includes a main memory 2206, such as a random access memory (RAM) or other dynamic storage device, coupled to bus 2202 for storing information and instructions to be executed by processor 2204. Main memory 2206 also may be used for storing temporary variables or other intermediate information during execution of instructions to be executed by processor 2204. Computer system 2200 further includes a read only memory (ROM) 2208 or other static storage device coupled to bus 2202 for storing static information and instructions for processor 2204. A storage device 2210, such as a magnetic disk or optical disk, is provided and coupled to bus 2202 for storing information and instructions.

Computer system 2200 may be coupled via bus 2202 to a display 2212, such as a cathode ray tube (CRT), for displaying information to a computer user. An input device 2214, including alphanumeric and other keys, is coupled to bus 2202 for communicating information and command selections to processor 2204. Another type of user input device is cursor control 2216, such as a mouse, a trackball, or cursor direction keys for communicating direction information and command selections to processor 2204 and for controlling cursor movement on display 2212. This input device typically has two degrees of freedom in two axes, a first axis (e.g., x) and a second axis (e.g., y), that allows the device to specify positions in a plane.

The invention is related to the use of computer system 2200 for selecting security preferences in a computer program. According to one embodiment of the invention, selecting security preferences in a computer program is provided by computer system 2200 in response to processor 2204 executing one or more sequences of one or more instructions contained in main memory 2206. Such instructions may be read into main memory 2206 from another computer-readable medium, such as storage device 2210. Execution of the sequences of instructions contained in main memory 2206 causes processor 2204 to perform the process steps described herein. One or more processors in a multi-processing arrangement may also be employed to execute the sequences of instructions contained in main memory 2206. In alternative embodiments, hard-wired circuitry may be used in place of or in combination with software instructions to implement the invention. Thus, embodiments of the invention are not limited to any specific combination of hardware circuitry and software.

The term "computer-readable medium" as used herein refers to any medium that participates in providing instructions to processor 2204 for execution. Such a medium may take many forms, including but not limited to, non-volatile media, volatile media, and transmission media. Non-volatile media includes, for example, optical or magnetic disks, such as storage device 2210. Volatile media includes dynamic memory, such as main memory 2206. Transmission media includes coaxial cables, copper wire and fiber optics, including the wires that comprise bus 2202. Transmission media can also take the form of acoustic or light waves, such as those generated during radio wave and infrared data communications.

Common forms of computer-readable media include, for example, a floppy disk, a flexible disk, hard disk, magnetic tape, or any other magnetic medium, a CD-ROM, any other optical medium, punch cards, paper tape, any other physical medium with patterns of holes, a RAM, a PROM, and EPROM, a FLASH-EPROM, any other memory chip or cartridge, a carrier wave as described hereinafter, or any other medium from which a computer can read.

Various forms of computer readable media may be involved in carrying one or more sequences of one or more instructions to processor 2204 for execution. For example, the instructions may initially be carried on a magnetic disk of a remote computer. The remote computer can load the instructions into its dynamic memory and send the instructions over a telephone line using a modem. A modem local to computer system 2200 can receive the data on the telephone line and use an infrared transmitter to convert the data to an infrared signal. An infrared detector coupled to bus 2202 can receive the data carried in the infrared signal and place the data on bus 2202. Bus 2202 carries the data to main memory 2206, from which processor 2204 retrieves and executes the instructions. The instructions received by main memory 2206 may optionally be stored on storage device 2210 either before or after execution by processor 2204.

Computer system 2200 also includes a communication interface 2218 coupled to bus 2202. Communication interface 2218 provides a two-way data communication coupling to a network link 2220 that is connected to a local network 2222. For example, communication interface 2218 may be an integrated services digital network (ISDN) card or a modem to provide a data communication connection to a corresponding type of telephone line. As another example, communication interface 2218 may be a local area network (LAN) card to provide a data communication connection to a compatible LAN. Wireless links may also be implemented. In any such implementation, communication interface 2218 sends and receives electrical, electromagnetic or optical signals that carry digital data streams representing various types of information.

Network link 2220 typically provides data communication through one or more networks to other data devices. For example, network link 2220 may provide a connection through local network 2222 to a host computer 2224 or to data equipment operated by an Internet Service Provider (ISP) 2226. ISP 2226 in turn provides data communication services through the world wide packet data communication network now commonly referred to as the "Internet" 2228. Local network 2222 and Internet 2228 both use electrical, electromagnetic or optical signals that carry digital data streams. The signals through the various networks and the signals on network link 2220 and through communication interface 2218, which carry the digital data to and from computer system 2200, are exemplary forms of carrier waves transporting the information.

Computer system 2200 can send messages and receive data, including program code, through the network(s), network link 2220 and communication interface 2218. In the Internet example, a server 2230 might transmit a requested code for an application program through Internet 2228, ISP 2226, local network 2222 and communication interface 2218. In accordance with the invention, one such downloaded application provides for selecting security preferences in a computer program as described herein.

The received code may be executed by processor 2204 as it is received, and/or stored in storage device 2210, or other non-volatile storage for later execution. In this manner, computer system 2200 may obtain application code in the form of a carrier wave.

The approach described herein for selecting security preferences provides several advantages over prior approaches. The modal approach allows two or more user interface modes to be tailored to attributes of users. This can greatly reduce the number of security attributes presented to less experienced users, making selecting security attributes less complex and less confusing. The modal approach also allows security preferences to be prioritized based upon which security preferences are presented to a user. In addition, the modal approach provides a higher level of security by automatically selecting certain security attributes on behalf of less experienced users to provide a relatively high level of user protection and by limiting the security preferences that a user can select.

In the foregoing specification, the invention has been described with reference to specific embodiments thereof. It will, however, be evident that various modifications and changes may be made thereto without departing from the broader spirit and scope of the invention. The specification and drawings are, accordingly, to be regarded in an illustrative rather than a restrictive sense.

## Claims

1. A method for selecting security preferences in computer software, the method comprising the computer-implemented steps of:
displaying a first user interface object via a user interface, wherein the first user interface object is associated with a first user interface mode in which a first set of one or more user interface objects is available for selecting the security preferences;
displaying a second user interface object via the user interface, wherein the second user interface object is associated with a second user interface mode in which a second set of one or more user interface objects is available for selecting the security preferences;
detecting a user interaction associated with the user interface;
determining whether the user interaction is associated with either the first user interface object or the second user interface object;
if the user interaction is associated with the first user interface object, then initiating the first user interface mode; and
if the user interaction is associated with the second user interface object, then initiating the second user interface mode.

2. The method as recited in Claim 1, wherein:
the first user interface mode corresponds to a first value of a particular user attribute, and
the second user interface mode corresponds to a second value of the particular user attribute.

3. The method as recited in Claim 2, wherein:
the first value of the particular user attribute corresponds to a first user experience level, and
the second value of the particular user attribute corresponds to a second user experience level.

4. The method as recited in Claim 1, wherein the step of initiating the first user interface mode includes displaying the first set of one or more user interface objects via the user interface and the step of initiating the second user interface mode includes displaying the second set of one or more user interface objects via the user interface.

5. The method as recited in Claim 1, wherein the computer software is an Internet browser.

6. The method as recited in Claim 1, wherein the step of initiating the first user interface mode includes displaying the first set of one or more user interface objects via the user interface in response to a security event and the step of initiating the second user interface mode includes displaying the second set of one or more user interface objects via the user interface in response to the security event.

7. A computer-readable medium carrying one or more sequences of one or more instructions for selecting security preferences in computer software, the one or more sequences of one or more instructions including instructions which, when executed by one or more processors, cause the one or more processors to perform the steps of:
displaying a first user interface object via a user interface, wherein the first user interface object is associated with a first user interface mode in which a first set of one or more user interface objects is available for selecting the security preferences;
displaying a second user interface object via the user interface, wherein the second user interface object is associated with a second user interface mode in which a second set of one or more user interface objects is available for selecting the security preferences;
detecting a user interaction associated with the user interface;
determining whether the user interaction is associated with either the first user interface object or the second user interface object;
if the user interaction is associated with the first user interface object, then initiating the first user interface mode; and
if the user interaction is associated with the second user interface object, then initiating the second user interface mode.

8. The computer-readable medium as recited in Claim 7, wherein:
the first user interface mode corresponds to a first value of a particular user attribute, and
the second user interface mode corresponds to a second value of a particular user attribute.

9. The computer-readable medium as recited in Claim 6, wherein:
the first value of the particular user attribute corresponds to a first user experience level, and
the second value of the particular user attribute corresponds to a second user experience level.

10. The computer-readable medium as recited in Claim 7, wherein the step of initiating the first user interface mode includes displaying the first set of one or more user interface objects via the user interface and the step of initiating the second user interface mode includes displaying the second set of one or more user interface objects via the user interface.

11. The computer-readable medium as recited in Claim 7, wherein the computer software is an Internet browser.

12. The computer-readable medium as recited in Claim 7, wherein the computer-readable medium is a carrier wave.

13. The computer-readable medium as recited in claim 7, wherein the step of initiating the first user interface mode includes displaying the first set of one or more user interface objects via the user interface in response to a security event and the step of initiating the second user interface mode includes displaying the second set of one or more user interface objects via the user interface in response to the security event.

14. A computer system comprising:
a user interface;
a first user interface object displayed via the user interface, wherein the first user interface object is associated with a first user interface mode in which a first set of one or more user interface objects is available for selecting security preferences; and
a second user interface object displayed via the user interface, wherein the second user interface object is associated with a second user interface mode in which a second set of one or more user interface objects is available for selecting the security preferences,
wherein the computer system is configured to
detect a user interaction associated with the user interface,
determine whether the user interaction is associated with either the first user interface object or the second user interface object,
if the user interaction is associated with the first user interface object, then initiate the first user interface mode, and
if the user interaction is associated with the second user interface object, then initiate the second user interface mode.

15. The computer system as recited in Claim 14, wherein:
the first user interface mode corresponds to a first value of a particular user attribute, and
the second user interface mode corresponds to a second value of a particular user attribute.

16. The computer system as recited in Claim 15, wherein:
the first value of the particular user attribute corresponds to a first user experience level, and
the second value of the particular user attribute corresponds to a second user experience level.

17. The computer system as recited in Claim 13, wherein the step of initiating the first user interface mode includes displaying the first set of one or more user interface objects via the user interface and the step of initiating the second user interface mode includes displaying the second set of one or more user interface objects via the user interface.

18. The computer system as recited in Claim 13, wherein the computer software is an Internet browser.

19. The computer system as recited in claim 13, wherein the step of initiating the first user interface mode includes displaying the first set of one or more user interface objects via the user interface in response to a security event and the step of initiating the second user interface mode includes displaying the second set of one or more user interface objects via the user interface in response to the security event.

20. A method for handling a security event in computer software, the method comprising the computer-implemented steps of:
detecting a security event;
determining whether a first user interface mode or a second user interface mode has been selected;
if the first user interface mode has been selected, then displaying one or more user interface objects associated with the first user interface mode to notify a user that the security event has occurred and to provide one or more options for responding to the security event; and
if the second user interface mode has been selected, then displaying one or more user interface objects associated with the second user interface mode to notify the user that the security event has occurred and to provide one or more options for responding to the security event,
wherein the first and second user interface modes correspond generally to different user experience levels.

21. A computer program comprising computer code to perform the method according to any one of claims 1 to 6 or 20 when run on a computer.
